# EUROPEAN PATENT SPECIFICATION

(11) **EP 0 372 742 B1**
(45) Date of publication and mention of the grant of the patent: **16.08.1995**
(21) Application number: 89312054.3
(22) Date of filing: 21.11.1989
(51) Int. Cl.: H04B 10/14, H03H 7/38

(54) **Broadband optical receiver**
Optischer Breitbandempfänger
Récepteur optique à large bande

(30) Priority: 06.12.1988 US 280388
(43) Date of publication of application: 13.06.1990
(73) Proprietor: ORTEL CORPORATION, Alhambra California 91803 (US)
(72) Inventor: Blauvelt, Henry A., Los Angeles California 90068 (US); Ury, Israel, Los Angeles California 90036 (US); Huff, David H., Downey California 90242 (US); Loboda, Howard L., Los Angeles California 90035 (US)
(74) Representative: Enskat, Michael Antony Frank

(56) References cited:
- WO-A-88/01813
- WO-A-88/05234
- US-A- 3 551 855
- PATENT ABSTRACTS OF JAPAN vol. 2, no. 68 (E-78)24 May1978 &JP-A-53 033 083 ( NIPPON DENSHIN ) 28 March 1978

## Description

The present invention relates generally to the conversion or modulated light to electrical signals and more particularly, to reception or broadband radio-frequency (R-F) modulated signals including signals found in multichannel amplitude modulated (AM) television distribution systems transmitted through fiber optic cable.

Serviceable optical receivers now exist for fiber-optic audio and digital communications systems. However, there is a lack or inexpensive, low distortion, low noise optical receivers for R-F fiber-optic cable transmitted signals. Broadband cable television signals are amplitude modulated and include the frequencies from 50 MHz to 550 MHz. As alternatives to transmission of AM television signals through fiber-optic cable, frequency modulated (FM) and digitally encoded television signals have been demonstrated. However, such alternatives to AM transmission are not competitive with existing wire cable television systems because of the equipment needed to encode and decode the television signal. AM transmission of television signals through fiber-optic cable requires an optical receiver which can amplify the received signal with very low distortion and which adds a minimum amount of noise.

Prior art optical receivers have amplifiers specially designed to match the impedance of photodiodes and are connected directly thereto. However, such optical receivers are used primarily for transmission of digital communication and have more inherent distortion than is permissible for the transmission of broadband AM signals.

WO-A-8 801 813 discloses a broadband R-F optical receiver comprising impedance matching means including an inductance in series with a quarter wavelength transformer.

This invention provides an inexpensive practical optical receiver which operates with broadband signals over the R-F frequencies of from 10 MHz to at least 900 MHz. The invention overcomes the noise and distortion problems associated with fiber-optic cable receivers and is designed to operate with low cost, commercially available cable television amplifiers.

The present invention is an R-F optical receiver according to the features of the claims.
FIG. 1 is a block diagram of an embodiment of the invention;
FIG. 2 is a graph showing performance of an embodiment with and without the impedance matching means shown in FIG. 1;
FIG. 3 is a perspective view of a transformer assembly used in the invention;
FIG. 4 is a perspective view of an alternate transformer assembly;
FIG. 5 is a schematic diagram of a circuit showing another embodiment of the invention;
FIG. 6 is a graph showing performance of the embodiment shown in FIG. 5;
FIG. 7 is a schematic diagram of a preferred embodiment of the invention;
FIG. 8 is a graph showing performance of the embodiment shown in FIG. 7;
FIG. 9 is a graph showing performance of another embodiment of FIG. 7;
FIG. 10 is a graph showing performance of another embodiment of FIG. 7;
FIG. 11 is a schematic diagram of a second preferred embodiment of the invention; and
FIG. 12 is a graph showing performance of the embodiment shown in FIG. 11.

Optical receivers consist minimally of a photodetector for converting an optical signal to an electrical signal and an amplifier for boosting the electrical signal to a level suitable for use, such as for driving a television receiver. To be practical for reception of AM television signals, the receiver must provide gain without inducing any significant additional distortion and add as little noise as possible.

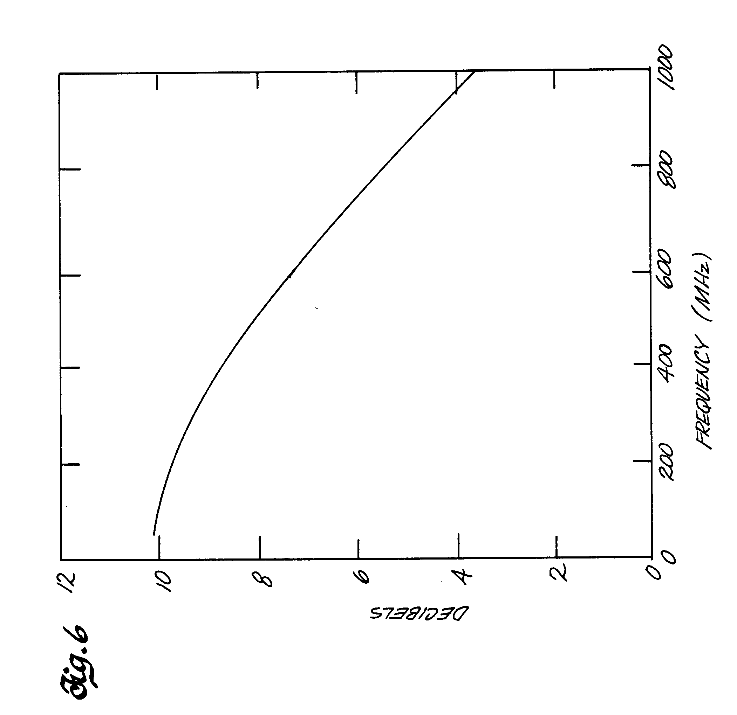

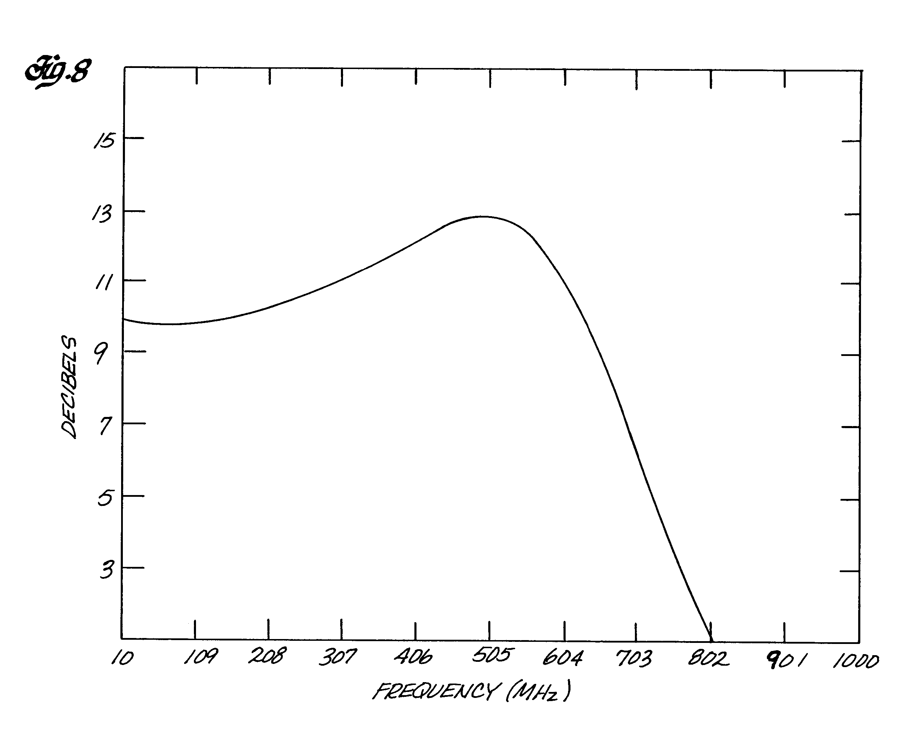

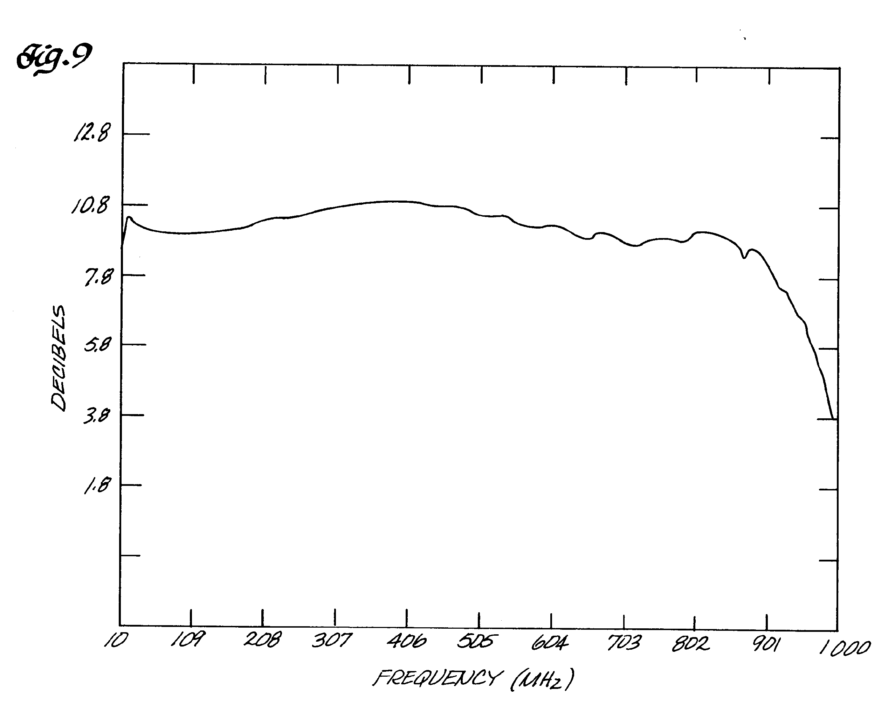

Optical receiver photodetectors are generally either a PIN type diode or an avalanche photodiode. Avalanche photodiodes amplify the received signal but add excess noise. They are generally useful for very low received power levels, but their excess noise makes them inferior for the higher power levels of fiber-optic cable systems. Referring to FIGS. 5, 7 and 11, a low capacitance (0.2 pF), high speed Indium Gallium Arsenide PIN diode is used as the photodiode 10, 110 and 32. This photodiode is a high impedance device in the range of 2,000 ohms.

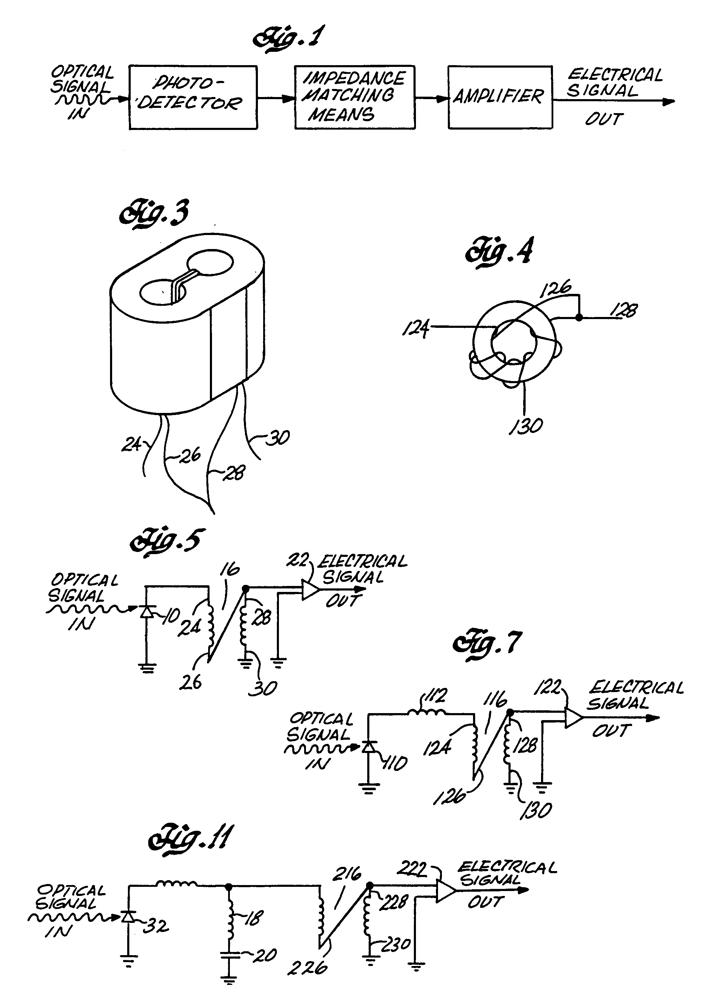

An exemplary amplifier 22 (FIG. 5) is a hybrid cable television amplifier such as a Motorola MHW 6171. This amplifier is inexpensive and has a gain factor sufficient to drive the input of a television receiver, a frequency range of from 10 MHz to 550 MHz, a noise figure of less than 8 dB and distortion at least 50 dB below the signal level. However, this amplifier also has a low impedance input of 75 ohms. To make better use of this and similar cable television amplifiers, means are needed to match the high impedance of the photodiode to the low impedance of the amplifier over the broadband cable television frequency spectrum (FIG. 1). In a preferred embodiment this impedance matching is achieved by the use of an impedance matching transformer and a passive tuning network. The passive tuning network may be one or more discrete or distributed capacitors, inductors and resistors.

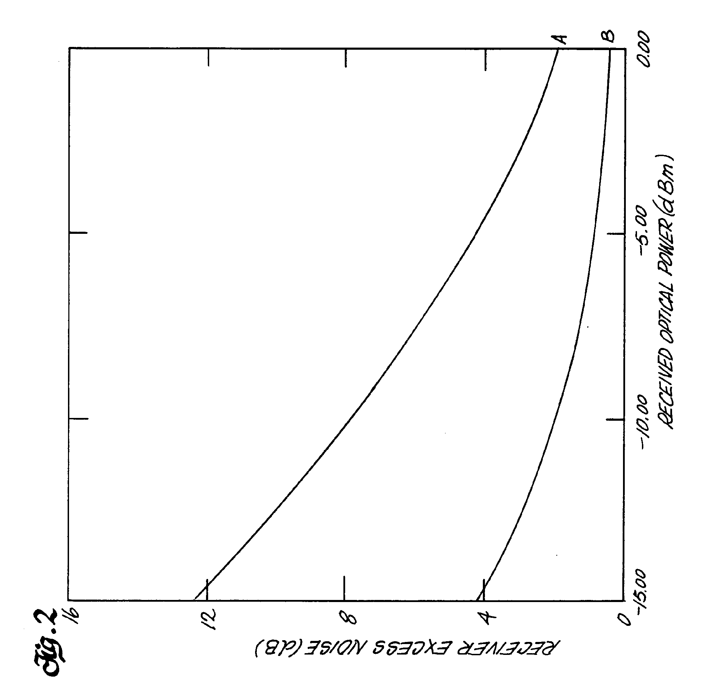

All optical receivers have output noise due to the shot noise associated with the current generated by the photodiode, also referred to quantum noise. The optimization of the receiver requires that the quantum limit be approached as closely as possible. In practice of this invention the incorporation of impedance matching circuitry between the photodiode and the amplifier significantly reduces the noise in excess of the quantum limit. The optical receiver operates within one decibel (dB) of the quantum limit while introducing negligible distortion for received optical power levels between -6 decibel milliwatts (dBm) and 0 dBm. This is the normal range of received power of fiber-optic links transmitting AM television signals. The excess noise over the quantum limit is shown in FIG. 2, for the first preferred embodiment of the invention described below. Line "A" in FIG. 2 is the relative amount of excess noise without impedance matching. Line "B" shows the relative improvement obtained after adding impedance matching circuitry.

The simplest impedance matching means is a transformer 16 as shown in FIG. 5. The transformer may have various input and output impedance ratios ranging from 2:1 to 100:1, with a preferred ratio of 12:1 to 20:1 for operation with R-F frequencies from 10 MHz to 550 MHz.

The transformer has two windings wrapped on a ferrite core, which may be of various shapes. Two preferred shapes are binocular and toroidal as shown in FIGS. 3 and 4, respectively. The binocular shaped core may be purchased from Fair-Rite Products Corporation, Wallkill, New York 12589, as Part No. 2873002302. The first winding is made by wrapping .004 to .009 inch diameter, enamel insulated wire one to ten times around the core web between the two openings in FIG. 3. Six wraps are preferred for the first winding. The second end 26 of the first winding wire is connected to the first end 28 of a second similar wire. The second wire is wrapped in the same direction as the first, one to six times around the core web to create the secondary winding. Two wraps are preferred for the second winding. The interconnected wire ends 26 and 28 are connected to the input of the amplifier 22. The first end 24 of the first winding wire is connected to one electrode of the photodiode, and the second end 30 of the second winding is connected to ground as shown in FIG. 5.

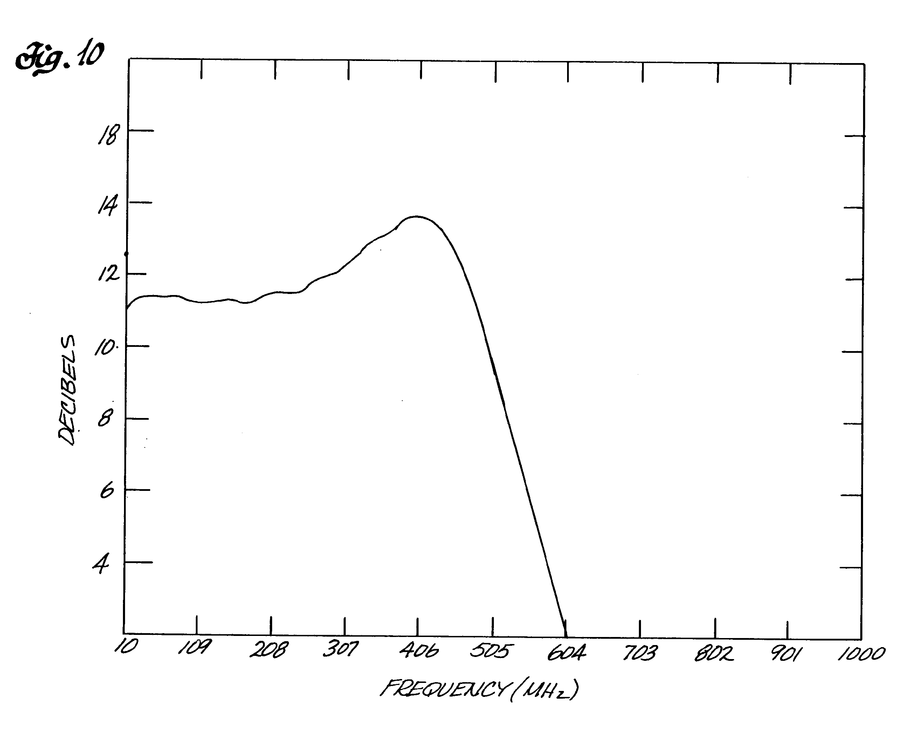

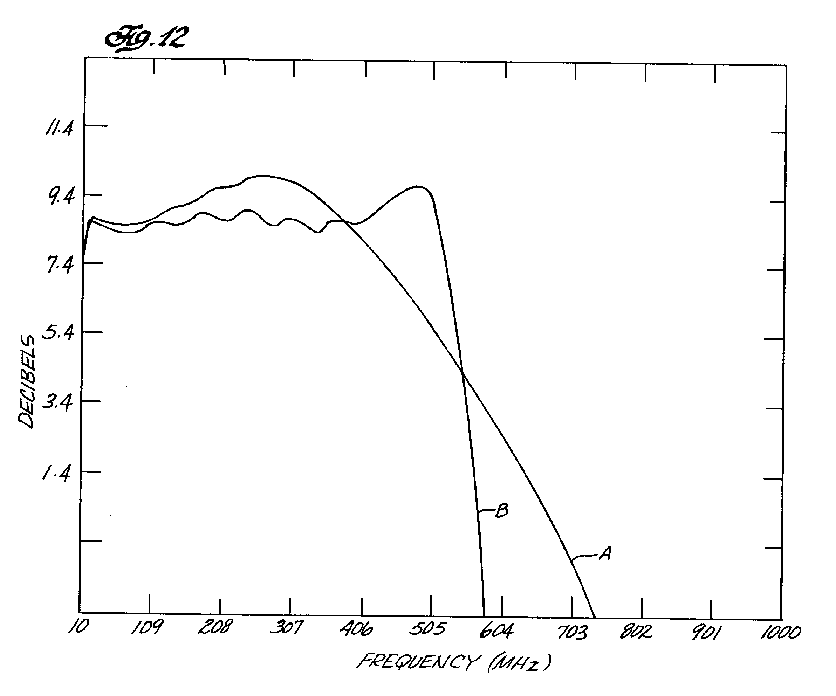

FIG. 4 shows a toroidal transformer which may be used in the invention in place of the binocular type shown in FIG. 3. This transformer has two windings wrapped on a ferrite core 32 available from Fair-Rite as Part Number 2673000101. As with the binocular transformer various impedance ratios may be used with the preferred ratio being 16:1. The first winding is made by wrapping .004 to .009 inch diameter, enamel insulated wire one to ten times around the core as shown in FIG. 4. Six wraps are preferred for the first winding. The second end of the first winding wire 126 is connected to the first end of a second similar wire 128. The second wire is wound one to six times around the core overlapping the first winding. As with the binocular transformer, above, interconnected wires 126 and 128 are connected to the input of the amplifier (FIG. 7). The first end 124 of the first winding is connected to one electrode of the photodiode. The second end 130 of the second winding is connected to ground.

Performance for the embodiment shown in FIG. 5, with a transformer having a 16:1 impedance ratio, has been calculated and plotted in FIG. 6. As can be seen, there is considerable gain at 10 MHz, but gain is continually reduced as frequency is increased to 550 MHz.

To improve impedance matching at frequencies above 10 MHz, a series inductor 112 is added to the circuit between the photodiode and the first winding of the transformer as shown in FIG. 7. The balance of the components shown in FIG. 7 are similar to and perform similarly to those shown in FIG. 5. They are labeled with the same reference numerals as similar components in FIG. 5, except that 100 has been added to each one. For example, transformer 16 in FIG. 5 corresponds to transformer 116 in FIG. 7. In a like manner similar components in FIG. 11, discussed below, have 200 added to each one.

The value of the series inductor 112 in FIG. 7 may range between 20 nano Henrys (nH) and 1000 nH. The series inductor causes inductive peaking in the circuit. The various values of the series inductor shift the frequency at which the peaking will occur. In the embodiment shown in FIG. 7, when a 230 nH series inductor is selected the maximum gain of the circuit occurs at about 500 MHz.

Performance of this circuit has been tested and plotted in FIG. 8. The 230 nH series inductor placed in the circuit results in a positive slope (tilt) over the television frequency spectrum from near 50 MHz to about 550 MHz followed by a negative tilt at higher frequencies. The positive tilt of the gain at broadband cable television frequencies is not an undesirable characteristic because other portions of the cable television system cause some attenuation of the higher frequencies.

An embodiment of the invention utilizing a 230 nH series inductor and 16:1 ratio transformer provides from a 10 to 13 dB signal increase of the received signals over the frequency range of from 10 MHz to 550 MHz.

As can be seen in FIG. 9, the use of a 130 nH series inductor and a 12:1 ratio transformer results in a relatively flat frequency response for the optical receiver from 10 MHz to 900 MHz.

The use of a 460 nH series inductor and a 20:1 ratio transformer has also been tested and found to result in an increased gain from 10 MHz to 400 MHz as can be seen in FIG. 10. The use of other values of the series inductor and transformer impedance ratio will allow the tuning of the optical receiver for other ranges of frequencies.

Another preferred embodiment of the invention may be seen in FIG. 11. A PIN diode 32 with a capacitance of 0.5 pF is used. The higher capacitance of this photodiode requires a different passive tuning network than the preceding embodiments. The circuit in FIG. 11 is similar to the circuit in FIG. 7 except that an L-C shunt is added and a 12:1 ratio transformer is used to improve the high frequency response of the optical receiver. The L-C circuit consists of a shunt inductor 18 and a capacitor 20 connected across the first winding of the transformer 216. As can be seen by FIG. 12, the tuning effect of the L-C shunt circuit flattens and extends the high frequency response of the optical receiver. The trade-off for this improvement is that once the gain begins to be reduced as frequency continues to be increased, it falls even more steeply than in the circuit in the embodiments without the L-C shunt. The operational value of the shunt inductor is from 100 to 1000 nH, with a preferred value of 210 nH. The operational value of the capacitor is from 0.05 pico Farad (pF) to 1 pF, with a preferred value of 0.2 pF. The values of the shunt inductor and the capacitor have been chosen to provide a relatively flat frequency response curve from 50 MHz to 550 MHz for a specific circuit constructed for test. Different values may be chosen to optimize frequency response over a different range of frequencies. Because component placement and the length of connecting leads will affect circuit operation, the values of the shunt inductor and the capacitor will vary based on the inherent inductance and capacitance of the circuit as built. Due to the extremely low capacitance value needed, the required capacitance may be found to be inherent in the capacitive effects of the component layout. when this occurs the capacitor, as a discrete component, may be omitted from the circuit. It will also be recognized that the components and leads have some resistance. Discrete resistors may also be used in the passive tuning network for obtaining flat response from the optical receiver.

Various other photodetectors will require various other passive tuning networks and transformer ratios for optimum performance. Additionally, as can be appreciated by one skilled in the art, other passive tuning networks and other transformer designs may also be successfully used with the embodiments discussed above. Although described in the context of a 75 ohm input impedance hybrid television frequency amplifier, it will be apparent that principles of this invention are applicable to other amplifiers. For example, it is suitable for use with conventional 50 ohm impedance amplifiers.

## Claims

1. A broadband R-F optical receiver comprising: a photodiode (10,110) having two electrodes, and an R-F amplifier (22,122) having an input and an output, characterised in that the R-F amplifier (22,122) has an input impedance substantially different from the impedance of the photodiode (10,110), in that the one electrode of the photodiode (10,110) is connected to ground, and by a ferromagnetic transformer (16,116) having first and second windings (24,124 and 28,128), the first winding (24,124) being connected between the other electrode of the photodiode (10,110) and the input of the amplifier (22,122), and the second winding (28,128) of the transformer (16,116) being connected between the input of the amplifier (22,122) and electrical ground to effect an impedance match between the photodiode (10,110) and the amplifier (22,122).

2. A broadband R-F optical receiver according to Claim 1, characterised by an inductor (112) connected in series between the first winding (124) of the transformer (116) and the said other electrode of the photodiode (110).

3. A broadband R-F optical receiver according to Claim 1 or to Claim 2, characterised in that the photodiode (10,110) is a PIN diode.

4. A broadband R-F optical receiver according to Claim 1 or to Claim 2, characterised in that the transformer (16,116) has: a ferrite core having a first side and a second side with two openings therethrough and a centre web between the openings; a first winding with first and second ends (24,26) and wrapped one to ten times around the centre web of the core, its first end (24) being connected to the photodiode (10,110); and a second winding with a first end (28) and second end (30) wrapped one to ten times around the centre web of the core, with the first end (28) of the second winding connected to the second end (26) of the first winding and to the input of the amplifier (22,122), and the second end (30) of the second winding connected to ground.

5. A broadband R-F optical receiver according to any one of Claim 1 to 3, characterised in that the transformer has: a ferrite core in the shape of a torus; a first winding with first and second ends (124,126) and wrapped one to ten times around the core, its first end being connected to the photodiode (10,110); and a second winding with first and second ends (128,130) and wrapped around the core, the first end (128) of the second winding being connected to the second end (126) of the first winding and to the input of the amplifier (22,122), and the second end (130) of the second winding being connected ground.

6. A broadband R-F optical receiver according to any preceding claim, characterised in that the amplifier (22,122) is a hybrid cable television amplifier.

7. A broadband R-F optical receiver according to any preceding claim, characterised in that the amplifier (22,122) has a gain factor sufficient to drive the input of a television receiver, an output impedance of from 50 to 75 ohms in the frequency range of from 10 MHz to 550 MHz, a noise figure of less than 8 dB and distortion at least 50 dB below signal level.

8. A broadband R-F optical receiver according to any of Claims 3 to 7, characterised in that the bandwidth of the receiver extends from 10 MHz to 550 MHz.

9. A broadband R-F optical receiver according to Claim 2 or any one of Claims 3 to 8 as dependent upon Claim 2, characterised in that the series inductor (112) has a value in the range of from 20 to 1000 nH.

10. A broadband R-F optical receiver according to any preceding claim, characterised in that the transformer (16,116) has an impedance ratio of from 2:1 to 100:1.

11. A broadband R-F optical receiver according to Claim 2 or any one of Claims 3 to 10 as dependent upon Claim 2, characterised by a shunt inductor (18) and means for providing capacitance (20), connected in series between the output of the series inductor (112) and ground.

12. A broadband R-F optical receiver according to Claim 11, characterised in that the shunt inductor has a value in the range of from 100 to 1000 nH.

13. A broadband R-F optical receiver according to Claim 11 or to Claim 12, characterised in that the capacitance means has a value in the range of 0.05 to 1 pF.

14. A broadband R-F optical receiver according to any preceding claim, characterised in that the transformer has an impedance ratio of from 12:1 to 16:1.

## Patentansprüche

1. Optischer RF-Breitbandempfänger mit:
einer Fotodiode (10, 110) mit zwei Elektroden und einem RF-Verstärker (22, 122) mit einem Eingang und einem Ausgang,
dadurch gekennzeichnet, daß der RF-Verstärker (22, 122) eine Eingangsimpedanz aufweist, welche sich wesentlich von der Impedanz der Fotodiode (10, 110) unterscheidet und, daß die eine Elektrode der Fotodiode (10, 110) geerdet ist und gekennzeichnet durch einen ferromagnetischen Transformator (16, 116) mit ersten und zweiten Windungen (24, 124 und 28, 128), wobei die erste Windung (24, 124) zwischen der anderen Elektrode der Fotodiode (10, 110) und dem Eingang des Verstärkers (22, 122) angeschlossen ist und die zweite Windung (28, 128) des Transformators (16, 116) zwischen dem Eingang des Verstärkers (22, 122) und Erde angeschlossen ist, um eine Impedanzanpassung zwischen der Fotodiode (10, 110) und dem Verstärker (22, 122) zu bewirken.

2. Optischer RF-Breitbandempfänger gemäß Anspruch 1,
gekennzeichnet durch eine zwischen der ersten Windung (124) des Transformators (116) und der anderen Elektrode der Fotodiode (110) in Serie geschaltete Drosselspule (112).

3. Optischer RF-Breitbandempfänger gemäß Anspruch 1 oder 2,
dadurch gekennzeichnet, daß die Fotodiode (10, 110) eine PIN-Diode ist.

4. Optischer RF-Breitbandempfänger gemäß Anspruch 1 oder 2,
dadurch gekennzeichnet, daß der Transformator (16, 116) aufweist:
einen Ferritkern mit einer ersten Seite und einer zweiten Seite mit zwei Öffnungen durch ihn hindurch und einem zentralen Steg zwischen den Öffnungen; eine erste Windung mit ersten und zweiten Enden (24, 26), einbis zehnmal um den zentralen Steg des Kerns gewickelt, wobei ihr erstes Ende (24) mit der Fotodiode (10, 110) verbunden ist und eine zweite Windung mit einem ersten Ende (28) und einem zweiten Ende (30), ein- bis zehnmal um den zentralen Steg des Kerns gewickelt, wobei das erste Ende (28) der zweiten Windung mit dem zweiten Ende (26) der ersten Windung und dem Eingang des Verstärkers (22, 122) verbunden ist und das zweite Ende (30) der zweiten Windung geerdet ist.

5. Optischer RF-Breitbandempfänger gemäß einem der Ansprüche 1 bis 3,
dadurch gekennzeichnet, daß der Transformator aufweist:
einen torusförmigen Ferritkern; eine erste Windung mit ersten und zweiten Enden (124, 126), ein- bis zehnmal um den Kern gewickelt, wobei ihr erstes Ende mit der Fotodiode (10, 110) verbunden ist; und eine zweite Windung mit ersten und zweiten Enden (128, 130), gewickelt um den Kern, wobei das erste Ende (128) der zweiten Windung mit dem zweiten Ende (126) der ersten Windung und mit dem Eingang des Verstärkers (22, 122) verbunden ist und das zweite Ende (130) der zweiten Windung geerdet ist.

6. Optischer RF-Breitbandempfänger gemäß einem der vorstehenden Ansprüche,
dadurch gekennzeichnet, daß der Verstärker (22, 122) ein Hybrid-Verstärker für das Kabelfernsehen ist.

7. Optischer RF-Breitbandempfänger gemäß einem der vorstehenden Ansprüche,
dadurch gekennzeichnet, daß der Verstärker (22, 122) einen Verstärkungsfaktor aufweist, welcher ausreicht, den Eingang eines Fernsehempfängers zu steuern, eine Ausgangsimpedanz von etwa 50 bis 75 Ohm im Frequenzbereich von etwa 10 bis 550 MHz, eine Rauschzahl von weniger als 8 dB und eine um mindestens 50 dB unterhalb des Signalpegels liegende Verzerrung aufweist.

8. Optischer RF-Breitbandempfänger gemäß einem der Ansprüche 3 bis 7,
dadurch gekennzeichnet, daß die Bandbreite des Empfängers sich von 10 MHz bis 550 MHz erstreckt.

9. Optischer RF-Breitbandempfänger gemäß Anspruch 2 oder einem der Ansprüche 3 bis 8, solange diese von Anspruch 2 abhängig sind,
dadurch gekennzeichnet, daß die in Serie geschaltete Drosselspule (112) eine Stärke im Bereich von etwa 20 bis 1000 nH aufweist.

10. Optischer RF-Breitbandempfänger gemäß einem der vorstehenden Ansprüche,
dadurch gekennzeichnet, daß der Transformator (16, 116) ein Impedanzverhältnis von etwa 2:1 bis 100:1 aufweist.

11. Optischer RF-Breitbandempfänger gemäß Anspruch 2 oder einem der Ansprüche 3 bis 10, solange sie von Anspruch 2 abhängig sind,
gekennzeichnet durch eine parallel geschaltete Drosselspule (18) und Mitteln zur Verwirklichung einer Kapazität (20), die zwischen dem Ausgang der in Serie geschalteten Drosselspule (112) und der Erde in Serie geschaltet sind.

12. Optischer RF-Breitbandempfänger gemäß Anspruch 11,
dadurch gekennzeichnet, daß die parallel geschaltete Drosselspule eine Stärke in dem Bereich von etwa 100 bis 1000 nH aufweist.

13. Optischer RF-Breitbandempfänger gemäß Anspruch 11 oder 12,
dadurch gekennzeichnet, daß die Kapazitätsmittel einen Wert im Bereich von 0,05 bis 1 pF aufweisen.

14. Optischer RF-Breitbandempfänger gemäß einem der vorstehenden Ansprüche, dadurch gekennzeichnet, daß der Transformator ein Impedanzverhältnis von etwa 12:1 bis 16:1 aufweist.

## Revendications

1. Récepteur optique HF à large bande comportant: une photodiode (10, 110) ayant deux électrodes, et un amplificateur HF (22, 122) ayant une entrée et une sortie, caractérisé en ce que l'amplificateur HF (22 ,122) a une impédance d'entrée sensiblement différente de l'impédance de la photodiode (10, 110), en ce que la première électrode de la photodiode (10, 110) est connectée au neutre, et par un transformateur ferromagnétique (16, 116) ayant un premier et un second enroulements (24, 124 et 28, 128), le premier enroulement (24, 124) étant connecté entre l'autre électrode de la photodiode (10, 110) et l'entrée de l'amplificateur (22, 122), et le second enroulement (28, 128) du transformateur (16, 116) étant connecté entre l'entrée de l'amplificateur (22, 122) et le neutre électrique pour réaliser une adaptation d'impédance entre la photodiode (10, 110) et l'amplificateur (22, 122).

2. Récepteur optique HF à large bande selon la revendication 1, caractérisé par une inductance (112) montée en série entre le premier enroulement (124) du transformateur (116) et ladite autre électrode de la photodiode (110).

3. Récepteur optique HF à large bande selon la revendication 1 ou la revendication 2, caractérisé en ce que la photodiode (10, 110) est une diode PIN.

4. Récepteur optique HF à large bande selon la revendication 1 ou la revendication 2, caractérisé en ce que le transformateur (16, 116) comporte un noyau en ferrite ayant une première et une seconde faces avec deux ouvertures traversantes et une partie centrale entre les ouvertures; un premier enroulement avec une première et une seconde extrémités (24, 26), enroulé de une à dix fois autour de la partie centrale du noyau, sa première extrémité (24) étant connectée à la photodiode (10, 110); et un second enroulement avec une première extrémité (28) et une seconde extrémité (30), enroulé de une à dix fois autour de la partie centrale du noyau, la première extrémité (28) du second enroulement étant connectée à la seconde extrémité (26) du premier enroulement et à l'entrée de l'amplificateur (22, 122), et la seconde extrémité (30) du second enroulement étant connectée au neutre.

5. Récepteur optique HF à large bande selon l'une quelconque des revendications 1 à 3, caractérisé en ce que le transformateur comporte un noyau en ferrite en forme de tore; un premier enroulement avec une première et une seconde extrémités (124, 126), enroulé de une à dix fois autour du noyau, sa première extrémité étant connectée à la photodiode (10, 110); et un second enroulement avec une première et une seconde extrémités (128, 130), enroulé autour du noyau, la première extrémité (128) du second enroulement étant connectée à la seconde extrémité (126) du premier enroulement et à l'entrée de l'amplificateur (22, 122), et la seconde extrémité (130) du second enroulement étant connectée au neutre.

6. Récepteur optique HF à large bande selon l'une quelconque des revendications précédentes, caractérisé en ce que l'amplificateur (22, 122) est un amplificateur de télévision par câble hybride.

7. Récepteur optique HF à large bande selon l'une quelconque des revendications précédentes , caractérisé en ce que l'amplificateur (22, 122) a un facteur de gain suffisant pour piloter l'entrée d'un récepteur de télévision, une impédance de sortie comprise entre 50 et 75 ohms dans la bande de fréquences de 10 MHz à 550 MHz, un niveau de bruit inférieur à 8 dB et une distorsion d'au moins 50 dB en-dessous du niveau du signal.

8. Récepteur optique HF à large bande selon l'une quelconque des revendications 3 à 7, caractérisé en ce que la bande passante du récepteur s'étend de 10 MHz à 550 MHz.

9. Récepteur optique HF à large bande selon la revendication 2, ou l'une quelconque des revendications 3 à 8, prises en dépendance de la revendication 2, caractérisé en ce que l'inductance montée en série (112) a une valeur comprise entre 20 et 1000 nH.

10. Récepteur optique HF à large bande selon l'une quelconque des revendications précédentes , caractérisé en ce que le transformateur (16, 116) a un rapport d'impédances compris entre 2:1 et 100:1.

11. Récepteur optique HF à large bande selon la revendication 2, ou l'une quelconque des revendications 3 à 10, prises en dépendance de la revendication 2, caractérisé par une inductance montée en parallèle (18) et des moyens de capacité (20), connectés en série entre la sortie de l'inductance montée en série (112) et le neutre.

12. Récepteur optique HF à large bande selon la revendication 11, caractérisé en ce que l'inductance montée en parallèle a une valeur comprise entre 100 et 1000 nH.

13. Récepteur optique HF à large bande selon la revendication 11 ou la revendication 12, caractérisé en ce que les moyens de capacité ont une valeur comprise entre 0,05 et 1 pF.

14. Récepteur optique HF à large bande selon l'une quelconque des revendications précédentes , caractérisé en ce que le transformateur a un rapport d'impédances compris entre 12:1 et 16:1.
